# EUROPEAN PATENT SPECIFICATION

(11) **EP 2 916 531 B1**
(45) Date of publication and mention of the grant of the patent: **24.10.2018**
(21) Application number: 14305305.6
(22) Date of filing: 04.03.2014
(51) Int. Cl.: H04M 3/54, H04M 3/42

(54) **Terminal, configured for forwarding a call to a private phone number**
Endgerät zur Rufweiterleitung an eine private Telefonnummer
Terminal, configuré pour transmettre un appel vers un numéro de téléphone privé

(43) Date of publication of application: 09.09.2015
(73) Proprietor: Alcatel Lucent, 91620 Nozay (FR)
(72) Inventor: Sorokin, Roman, 92707 Colombes (FR)
(74) Representative: Berthier, Karine

(56) References cited:
- US-A1- 2008 002 820
- US-B1- 6 285 750
- US-B1- 8 036 362

## Description

### BACKGROUND OF THE INVENTION

### Field of the invention

The present invention generally relates to the private telecommunication systems that are used by enterprises. Now these systems are called unified communication systems since they integrate several telecommunication services: telephony, instant messaging, etc. The invention concerns the conditional call forwarding: The call server of a unified communication system is configured so that, if a callee is not responding at a first terminal, then the call is automatically forwarded to another terminal, or to a voice box system.

For each employee, a professional phone number, a possible forwarding phone number, and possible forwarding conditions, are registered in a centralized memory in the call server, this memory constituting the directory of the enterprise. This directory enables any employee to place a call without knowing the callee's name, if the callee is an employee of the same enterprise. It suffices to type the callee's name on the keyboard of a communication terminal (Telephone, smartphone, personal computer, etc) that is connected to the enterprise network.

In addition, each professional communication terminal comprises a phonebook that is a memory storing names and associated phone numbers. These numbers are either professional or private. Usually private numbers of the employees are not registered in the directory of the unified communication system of the enterprise, so the system cannot forward calls to these private numbers. If private phone numbers were registered in the enterprise directory, the employees could receive undesirable professional calls when they are off duty.

### Description of the prior art

For instance, Alice and Bob are employees of an enterprise equipped with a unified communication system. So their respective professional phone numbers are registered in the directory of this enterprise.
At the same time, they are friends; so they know the private mobile phone numbers of each other. However these private numbers are not registered in the enterprise directory.
For instance, Alice calls Bob up by typing his name or by dialing his number on a communication terminal connected to the unified communication system of the enterprize. The system rings Bob's usual professional desk phone. If Bob does not answer, the call is automatically forwarded to Bob's professional mobile phone, because the system has been configured for forwarding a call to his professional mobile phone if Bob does not answer on his deskphone.
In this example, Bob is not accessible at the moment on his professional mobile phone, so the unified communication system proposes Alice to record a voicemail message for Bob. Alice refuses this proposal as she knows that the private mobile phone number of Bob is available in the phone book of her communication terminal. So she tries to use this private number to call Bob, this private number corresponding to a private mobile phone, for instance. If Bob does not answer on the private number, Alice may call Bob's deskphone again, in order to record a voicemail message, or she finally sends an e-mail message to Bob as all other means don't work.

In such situations, it would be more efficient that the unified communication system be able to use the private number of Bob for routing a call to Bob's private phone number if Bob is not accessible at the moment on any of his professional communication terminals. On the other hand, Bob does not want to be disturbed when he is not at work.
Thus, there is a need to provide a better technical solution for dealing with calls occurring when Bob is outside the enterprise.

The document US 8 036 362 describes a terminal comprising a processor configured for:
- requesting a call server to set up a call from this first terminal, used by a first user, and destined to a first number of a second user;
- requesting the call server to register, in a directory of the call server, a second number of the second user, and a logical relationship between the number of the first user and the registered second number of the second user, so that this call server memorizes that it is authorized to forward a call to the second number of the second user only if this call is originating from the number of the first user.

This terminal is not quite satisfactory because, for using this function, the user of the terminal must do configuration operations in the call server, for each new employee's name and number added in the directory of the terminal.
This problem can be solved by applying the terminal according to the invention.

### SUMMARY OF THE INVENTION

The object of the invention is a terminal comprising a processor configured for:
- requesting a call server to set up a call from this first terminal, used by a first user, and destined to a first number of a second user;
- requesting the call server to register, in a directory of the call server, a second number of the second user, and a logical relationship between the number of the first user and the registered second number of the second user, so that this call server memorizes that it is authorized to forward a call to the second number of the second user only if this call is originating from the number of the first user;
characterized in that said processor is further configured for:
- automatically detecting that a new entry has been registered in the phone book of this terminal, and the automatically sending a request to the call server for checking whether the name of the second user is registered in a directory of the call server;
- and if the name of the second user is registered in said directory, sending a request, from this terminal to said call server, requesting the call server to register the number of the first user and a logical relationship between the number of the first user and the registered second number of the second user, for the purpose of forwarding.

Thanks to the automatic sending, by the terminal, of a request to the call server, requesting to register the number of the first user and a logical relationship between the number of the first user and the registered second number of the second user, the terminal allows the call server to forward a call to the second number of the second user only if this call is originating from the registered number of the first user. Thus the call server is configured for enabling this function, without any intervention of the user.
Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings.
- Figure 1 show the steps of the automatic registration of the private number of a second employee, by means of an embodiment of the terminal and an embodiment of the call server according to the invention:
- Figure 2 illustrates the forwarding of a call to the private number of the second employee when the first employee has called a professional number of the second employee, by means of an embodiment of an embodiment of the call server according to the invention.

### DETAILED DESCRIPTION OF THE PREFERRED EMBODIMENTS

Let's consider a first employee A and a second employee B, two employees of an enterprise equipped with a unified communication system. Initially they don't have the respective private numbers of each other, so they can contact each other only by using their respective professional numbers registered in the corporate directory.
The second employee B communicates his/her a private phone number to the first employee A. Then this latter orders to his/her communication terminal to send a request to the enterprise call server, in order to register the number of this first employee A in association to the private number of the second employee B in the corporate directory, so that it memorizes that the call server is authorized to forward a call to the private number of the second employee B if this call is originating from the registered number of the first employee A.
According to a preferred embodiment, this registering is done automatically by the terminal of the first employee A, when it detects a new entry in the phone book of the first user.

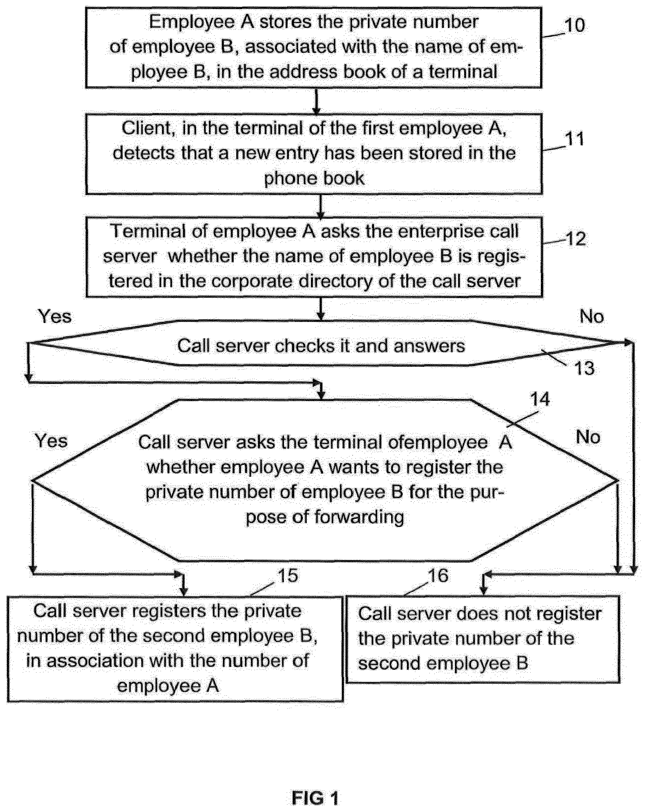

**Figure 1** illustrates this preferred embodiment: It show the steps of the automatic registration of the private number of a second employee B, by means of an embodiment of the terminal and an embodiment of the call server according to the invention:
   **Step 10:** The second employee B communicates a private phone number to the first employee A. The first employee A classically stores this private number, associated with the name of the second employee B, in the address book of the professional or private communication terminal, of this first employee A.
   **Step 11:** A client that has been previously installed in the terminal of the first employee A automatically detects that a new entry has been registered in the phone book of this terminal of the first employee A.
   **Step 12:** Then this client automatically sends a request to the enterprise call server, requesting to check whether the name of the second employee B is registered in the corporate directory of the call server; i. e. checks whether B is an employee of the enterprise.
   **Step 13:** In the call server, a software module according to the invention checks whether the name of the second employee B is registered in the corporate directory in the call server, and then answers the request. If the response is positive, it does the step 14. If the answer is negative, it does the step 17 (described Later).
   **Step 14:** If the response is positive, the software module of the call server requests the terminal of the first employee A to check whether this first employee A wants to register the private number of the second employee B for the purpose of forwarding. The client asks the first employee A by means of written message on the screen of the communication terminal. A response is sent by the client to the software module of the call server:
      - If the response indicates that the first employee A wants to register the private number of the second employee B for the purpose of forwarding, then the software module of the call server does the step 15.
      - If the response indicates that the first employee A does not want to register the private number of the second employee B for the purpose of forwarding, then the software module of the call server does the step 16.
   **Step 15:** The software module of the call server registers the private number of the second employee B and a logical relationship between the number of the first employee A and the registered private number of the second employee B in the corporate directory, so that the call server memorizes that it is authorized to forward a call to the private number of the second employee B only if this call is originating from the registered number of the first employee A.
   **Step 16:** The software module of the call server does not register the private number of the second employee B.

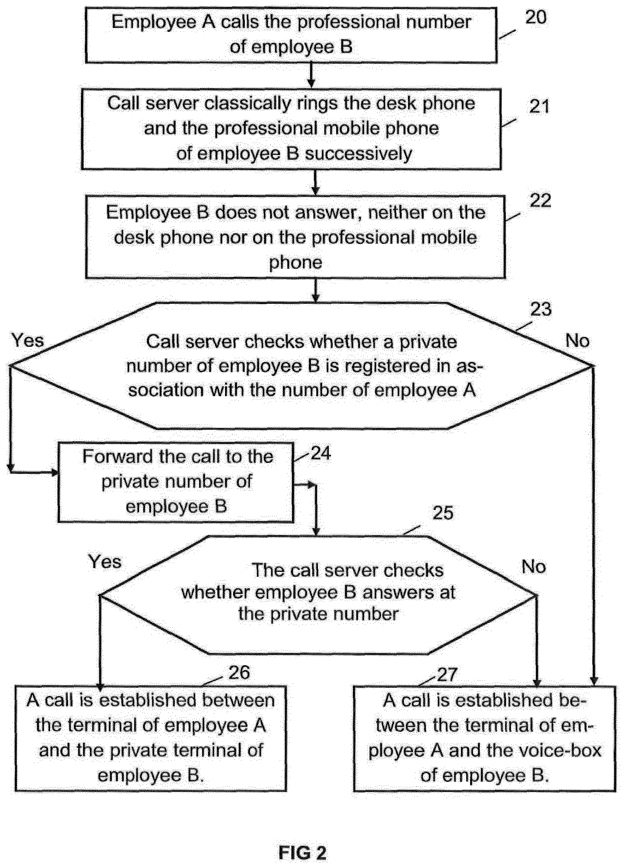

**Figure 2** illustrates the forwarding of a call to the private number of the second employee B when the first employee A has called the professional number of the second employee B, by means of an embodiment of the terminal and an embodiment of the call server according to the invention:
   **Step 20:** The first employee A calls the professional number of the second employee B, by means of a terminal the number of which has been previously registered, in the corporate directory of the call server, in association to the private number of the second employee B, so that the call server is authorized to forward a call to the private number of the second employee B only if this call is originating from the registered number of the first employee A.
   **Step 21:** The call server classically rings the desk phone and the professional mobile phone of the second employee B successively, because the call server has been classically configured to do this forwarding.
   **Step 22:** The call server observes that the second employee B does not answer, neither on the desk phone nor on the professional mobile phone.
   **Step 23:** In the call server, a software module according to the invention knows that the caller's number is the number of the first employee A. Then it checks whether a private number of the second employee B is registered, in the corporate directory; and it checks whether this private number of the second employee B is registered in association to number of the first employee A, which would mean that the call server is allowed to forward this call to the private number of the second employee B:
      --If a private number of the second employee B is registered in the corporate directory, in association to the number of the first employee A, then the software module does the step 25;
      -- otherwise it does the step 28 (described below).
   **Step 24:** The call server forwards the call to the private number of the second employee B.
   **Step 25:** The call server checks whether the second employee B answers at the private number:
      - If the second employee B answers, the call server does the step 26;
      - otherwise it does the step 27(described below).
   **Step 26:** A call is established between the terminal of the first employee A and the terminal of the second employee B.
   **Step 27:** A call is established between the terminal of the first employee A and the voice-box of the second employee B.

## Claims

1. A terminal comprising a processor configured for:
- requesting a call server to set up a call from this first terminal, used by a first user (A), and destined to a first number of a second user (B);
- requesting (14) the call server to register, in a directory of the call server, a second number of the second user (B), and a logical relationship between the number of the first user (A) and the registered second number of the second user (B), so that this call server memorizes that it is authorized to forward a call to the second number of the second user (B) only if this call is originating from the number of the first user (A);
**characterized in that** said processor is further configured for:
- automatically detecting (11) that a new entry, corresponding to the second number of the second user (B), has been registered in the phone book of this terminal, and then automatically sending (12) a request to the call server for checking whether the name of the second user (B) is registered in a directory of the call server;
- and if the name of the second user (B) is registered in said directory, sending (14) a request, from this terminal to said call server, requesting the call server to register the number of the first user (A) and a logical relationship between the number of the first user (A) and the registered second number of the second user (B), for the purpose of forwarding.

2. A terminal according to claim 1, **characterized in that** said processor is further configured for:
- receiving (15) from the call server a message asking whether the first user (A) confirms that this first user wants to register the second number of the second user (B) for the purpose of forwarding;
- and sending (15) a response to the call server.

## Patentansprüche

1. **Ein Anschluss,** umfassend einen Prozessor, konfiguriert zum:
- Anfordern eines Call-Servers zum Aufbauen eines Anrufs von diesem ersten Anschluss, verwendet von einem ersten Benutzer (A) und gerichtet an eine erste Nummer eines zweiten Benutzers (B);
- Anfordern (14) des Call-Servers zum Registrieren, in einem Verzeichnis des Call-Servers, einer zweiten Nummer des zweiten Benutzers (B) und einer logischen Beziehung zwischen der Nummer des ersten Benutzers (A) und der registrierten zweiten Nummer des zweiten Benutzers (B), sodass dieser Call-Server speichert, dass er autorisiert ist zum Weiterleiten eines Anrufs zur zweiten Nummer des zweiten Benutzers (B), nur dann, wenn dieser Anruf von der Nummer des ersten Benutzers (A) stammt;
**dadurch gekennzeichnet, dass** besagter Prozessor weiterhin konfiguriert ist zum:
- automatischen Erkennen (11), dass ein neuer Eintrag, der der zweiten Nummer des zweiten Benutzers (B) entspricht, registriert worden ist in dem Telefonbuch dieses Anschlusses, und dann automatisches Senden (12) einer Anforderung an den Call-Server zum Überprüfen, ob der Name des zweiten Benutzers (B) in einem Verzeichnis des Call-Servers registriert ist; und
- wenn der Name des zweiten Benutzers (B) in besagtem Verzeichnis registriert ist, Senden (14) einer Anforderung, von diesem Anschluss an besagten Call-Server, unter Anfordern des Call-Servers zum Registrieren der Nummer des ersten Benutzers (A) und einer logischen Beziehung zwischen der Nummer des ersten Benutzers (A) und der registrierten zweiten Nummer des zweiten Benutzers (B) zum Zwecke des Weiterleitens.

2. Anschluss nach Anspruch 1, **dadurch gekennzeichnet, dass** der besagte Prozessor weiterhin konfiguriert ist zum:
- Empfangen (15) von dem Call-Server einer Nachricht, die anfragt, ob der erste Benutzer (A) bestätigt, dass dieser erste Benutzer die zweite Nummer des zweiten Benutzers (B) zum Zweck des Weiterleitens registrieren möchte; und
- Senden (15) einer Antwort an den Call-Server

## Revendications

1. **Terminal** comprenant un processeur configuré pour :
- demander à un serveur d'appel d'établir un appel à partir de ce premier terminal, utilisé par un premier utilisateur (A), et destiné à un premier numéro d'un deuxième utilisateur (B) ;
- demander (14) au serveur d'appel d'enregistrer, dans un répertoire du serveur d'appel, un deuxième numéro du deuxième utilisateur (B), et une relation logique entre le numéro du premier utilisateur (A) et le deuxième numéro enregistré du deuxième utilisateur (B), de sorte que ce serveur d'appel mémorise qu'il est autorisé à renvoyer un appel au deuxième numéro du deuxième utilisateur (B) uniquement si cet appel provient du numéro du premier utilisateur (A) ;
**caractérisé en ce que** ledit processeur est en outre configuré pour :
- détecter automatiquement (11) qu'une nouvelle entrée, correspondant au deuxième numéro du deuxième utilisateur (B), a été enregistrée dans l'annuaire téléphonique de ce terminal, puis envoyer automatiquement (12) une demande au serveur d'appel pour vérifier si le nom du deuxième utilisateur (B) est enregistré dans un répertoire du serveur d'appel ; et
- si le nom du deuxième utilisateur (B) est enregistré dans ledit répertoire, envoyer (14) une demande, à partir de ce terminal vers ledit serveur d'appel, demandant au serveur d'appel d'enregistrer le numéro du premier utilisateur (A) et une relation logique entre le numéro du premier utilisateur (A) et le deuxième numéro enregistré du deuxième utilisateur (B), à des fins de renvoi.

2. Terminal selon la revendication 1, **caractérisé en ce que** ledit processeur est en outre configuré pour :
- recevoir (15) en provenance du serveur d'appel un message demandant si le premier utilisateur (A) confirme que ce premier utilisateur souhaite enregistrer le deuxième numéro du deuxième utilisateur (B) à des fins de renvoi ; et
- envoyer (15) une réponse au serveur d'appel.
